# EUROPEAN PATENT APPLICATION

(11) **EP 4 653 264 A1**
(43) Date of publication of application: **26.11.2025**
(21) Application number: 25178123.3
(22) Date of filing: 22.05.2025
(51) Int. Cl.: B60R 11/02, B60R 11/00

(54) **VEHICLE ACCESSORY ELECTRONIC DEVICE HOLDER BRACKETS FOR ACCESSORY ELECTRONIC DEVICES AND METHOD FOR USE**

(30) Priority: 23.05.2024 US 202463651250 P
(71) Applicant: Arkon Resources, Inc., Arcadia CA 91006 (US)
(72) Inventor: ARANA, JR., Benjamin, Montclair (US)
(74) Representative: FRKelly

(57) **Abstract**

An accessory electronic device holding bracket (100/200) for attachment to a vehicle for detachably attaching and securely holding an accessory electronic device (E) and method for using same. The accessory electronic device holding bracket (100/200) comprising an elongated extension portion (102/202) with two spaced apart attachment positions (104, 106/204, 206) adapted to rigidly engage with portions of a vehicle's dashboard (D), and an accessory electronic device holder mounting portion (110/210) spaced away from the two spaced apart attachment positions104, 106/204, 206). The device holder mounting portion (102/202) is adapted to engage with an accessory electronic device caddy (C) that physically retains an accessory electronic device (E). A power cord (160/380) is provided to electrically connect between electrical power wirings of the vehicle and either the accessory electronic device caddy (C) or directly to the accessory electronic device (E).

## Description

### FIELD OF THE INVENTION

The present disclosure relates to holding devices for vehicles, and more particularly to vehicle for accessory electronic device holders and their methods of use, which accessory electronic device holders attachment brackets can be affixed to vehicle dashboards, and when used in conjunction with device holders, can securely position electronic devices, such as computers, computer tablet, and cellular telephones, with their displays and input screens viewable, readily accessible, and securely positioned for user.

### BACKGROUND OF THE INVENTION

Currently, in many transportation, service and law enforcement vehicles, workers need to use a variety of accessory electronic devices such as cellular telephones, computers, computer tablets, computer monitors, GPS navigation and mapping devices, cameras, radios, barcode scanners, and the like in their vehicles. These accessory electronic devices are most often needed in the front row of vehicle cab, which can become cluttered and overcrowded. Some users will resort to setting the electronic devices on the passenger seat, the dashboard, or the center console. None of these places are ideal since the accessory electronic devices can shift and slide during movement of the vehicle, and such positioning can interfere with the user's free access to these parts of the cab. Moreover, laid out as such, the accessory electronic devices are seldom in the best position for viewing and inputting and are not securely mounted.

Thus, it would be highly desirable to have attachment brackets adapted to be affixed to vehicle dashboards, and when used in conjunction with device holders, can securely position accessory electronic devices in the correct position and without rattling or uncontrollably moving.

### SUMMARY OF THE INVENTION

The present invention provides an accessory electronic device holding bracket for attachment to a vehicle for mountably attaching and securely holding an accessory electronic device. The accessory electronic device holding bracket comprising an elongated extension portion with two spaced apart attachment positions adapted to rigidly engage with portions of a vehicle's dashboard. It also comprises an accessory electronic device holder mounting portion spaced away from the two spaced apart attachment positions, which device holder mounting portion is adapted to engage with an accessory electronic device caddy that physically retains an accessory electronic device.

The present invention also provides a method for equipping a vehicle with an accessory electronic device holding bracket for detachably attaching and securely holding an accessory electronic device. The method comprises providing an accessory electronic device holding bracket comprising an elongated extension portion with two spaced apart attachment positions adapted to rigidly engage with portions of a vehicle's dashboard and an accessory electronic device holder mounting portion spaced away from the two spaced apart attachment positions, which device holder mounting portion is adapted to engage with an accessory electronic device caddy that physically retains an accessory electronic device. The method also comprises affixing the accessory electronic device holding bracket to the vehicle with the two spaced apart attachment positions and attaching the accessory electronic device caddy to the accessory electronic device holder mounting portion of the accessory electronic device holding bracket.

### BRIEF DESCRIPTION OF THE DRAWINGS

FIG. 1 is a perspective view of an exemplary embodiment of an accessory electronic device holding bracket of the invention.
FIG. 2 is another perspective view of accessory electronic device holding bracket of FIG. 1.
FIG. 3 is yet another perspective view of the accessory electronic device holding bracket of FIG. 1.
FIG. 4 is a further perspective view of the accessory electronic device holding bracket of FIG. 1.
FIG. 5 shows a prior art environment into which the accessory electronic device holder bracket of FIG. 1 will be installed, showing threaded screw holding locations for a radio in a dashboard prior to removal of the radio.
FIG. 6 shows the accessory electronic device holding bracket of FIG. 1 being installed in the same location of the threaded screw holding locations for the radio.
FIG. 7 shows the accessory electronic device holding bracket of FIG. 1 fully installed, but not showing the accessory electronic device engaged with an accessory electronic device caddy.
FIG. 8 shows the accessory electronic device holding bracket of FIG. 1 fully installed and with the accessory electronic device engaged with the accessory electronic device caddy.
FIG. 9 shows a prior art environment wherein the power outlet and cover plate of a vehicle's dash is shown being removed to expose wiring.
FIG. 10 shows the power outlet of the vehicle's dash being accessed for electrical supply to the accessory electronic devices to be mounted to the accessory electronic device caddy.
FIG. 11 shows a power cord for the accessory electronic device caddy after its installation is completed.
FIG. 12 is a perspective view of another exemplary embodiment of an accessory electronic device holding bracket of the invention.
FIG. 13 is another perspective view of the accessory electronic device holding bracket of FIG. 12.
FIG. 14 is front view of the accessory electronic device holding bracket of FIG. 12.
FIG. 15 is a perspective view of an exemplary embodiment of the device holding clips used in conjunction with the accessory electronic device holding bracket of FIG. 12.
FIG. 16 shows a prior art environment into which the accessory electronic device holding brackets FIGS. 12 and 15 will be installed, showing a radio being removed from a dashboard to access threaded mounting locations in the dashboard.
FIG. 17 shows the radio completely removed with the device holding clips of FIG. 15 attached to the threaded mounting locations in the dashboard and the accessory electronic device holding bracket of FIG. 12 being affixed to the device holding clips.
FIG. 18 shows the radio and other parts of the dashboard reinstalled, and an accessory electronic device caddy attached to the device mounting bracket, which accessory electronic device caddy receives and holds the accessory electronic device.
FIG. 19 shows horizontal adjustability of the accessory electronic device holding bracket relative to the device holding clips.
FIG. 20 shows portions of the dash that need to be moved to access electrical supply in the dash area.
FIG. 21 shows portions of the dash after being removed to access electrical supply in the dash area.
FIG. 22 shows a power line being spliced into the electrical supply in the dash area.
FIG. 23 shows a power cord for the accessory electronic device caddy after its installation is completed.

### DETAILED DESCRIPTION

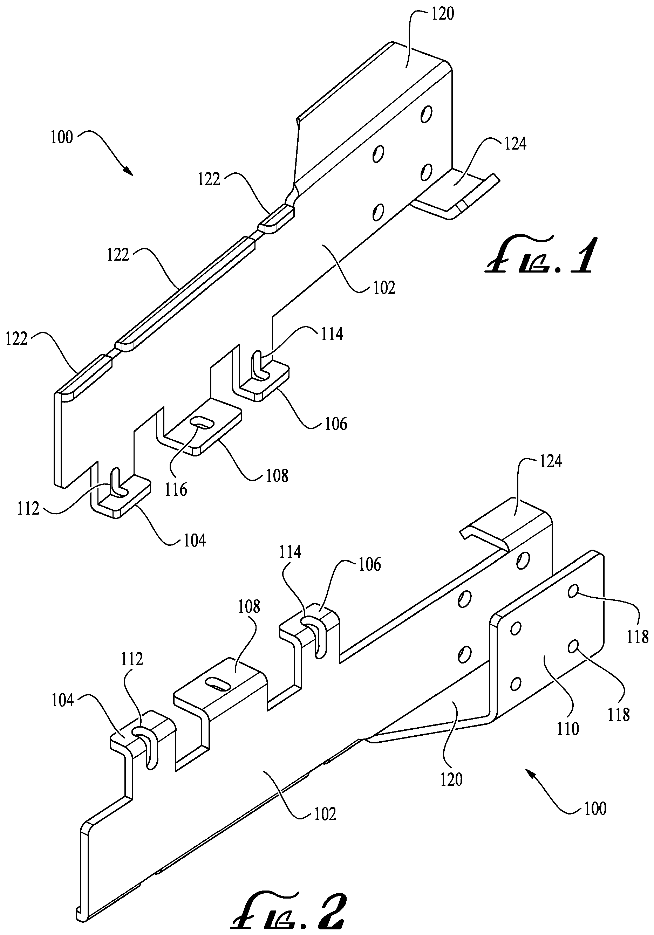

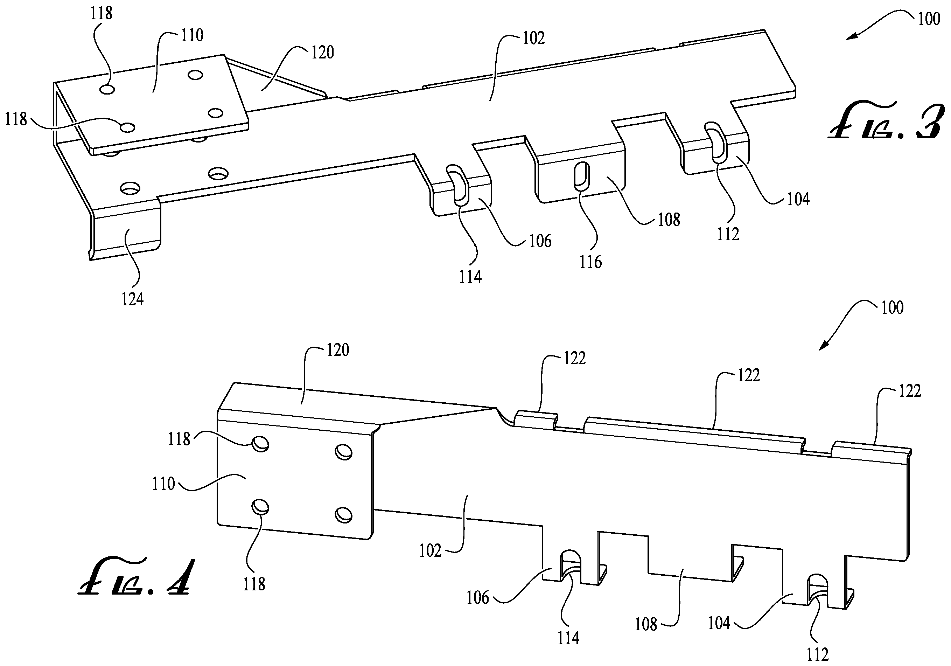

Referring first to FIGS. 1-4, there are shown various views of a first embodiment of the accessory electronic device holding bracket for a vehicle 100 of the invention. It comprises an elongated extension portion 102 with two spaced apart mounting tabs 104 and 106, with an optional centering tab 108 therebetween. The mounting tabs 104 and 106, and optional centering tab 108 have mounting holes 112, 114, and 116 formed therein, respectively. There is a device holder mounting portion 110, parallel to and spaced in front of the elongated extension portion 102 by a bend 120, which has a series of mounting holes 118 therein. Strengthening tabs 122 may be located on an edge of the elongated extension portion 102. A grasping handle 124 can extend from elongated extension portion 102 behind the device holder mounting portion 110.

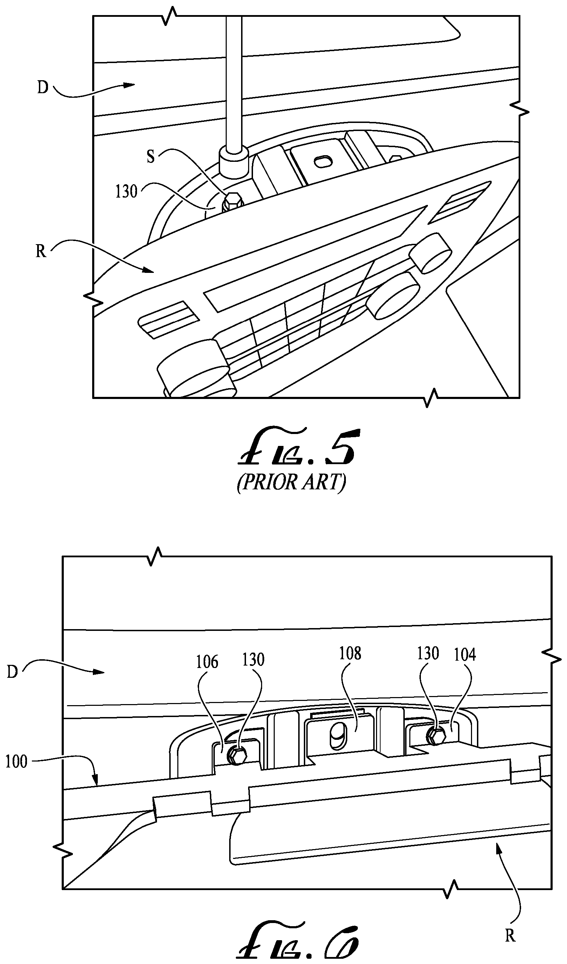

FIG. 5 shows the environment (prior art) into which the accessory electronic device holder bracket 100 of FIGS. 1-14 will be installed and shows threaded screw holding locations 130 for screws S holding a radio R in a dashboard D prior to removal of the radio R. It is these locations that will be used to secure the accessory electronic device holding bracket 100 in place to the vehicle.

FIG. 6 shows the accessory electronic device holding bracket 100 being installed in the same location of the threaded screw holding locations 130 for the radio R, with the screws 130 holding the mounting tabs 104 and 106 in place, with the centering tab 108 likewise positioning the accessory electronic device holding bracket 100. As installed, the accessory electronic device holding bracket 100 will be rigidly affixed to the vehicle's dashboard and not be subject to movement.

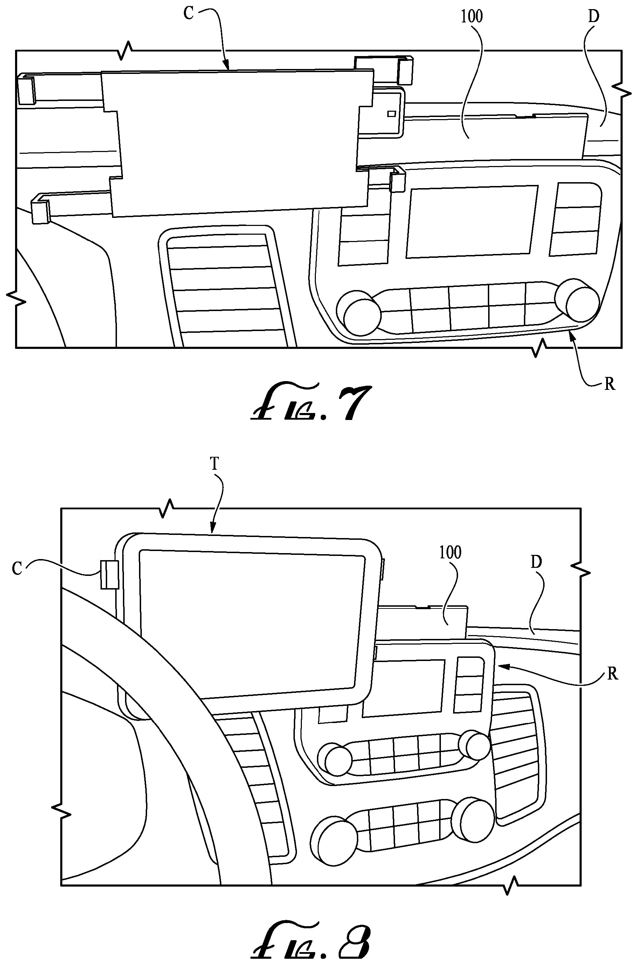

FIGS. 7 and 8 show an accessory electronic device caddy C attached to the accessory electronic device holding bracket 100 adj acent to the radio R in vicinity of the vehicle's dashboard D. The accessory electronic device caddy C will have the required electrical connectors required to power the accessory electronic device E (shown installed in FIG. 8). As secured as such, the accessory electronic device caddy C and accessory electronic device, shown here as a tablet computer T are rigidly mounted and easily accessible to a user, not obstructive to the user's access to other parts of the vehicle dash. Not shown, the accessory electronic device caddy C will be wired to the vehicle's power supply (currently 12V but compatible with any future power supply voltages, such as Tesla's 48 V systems.)

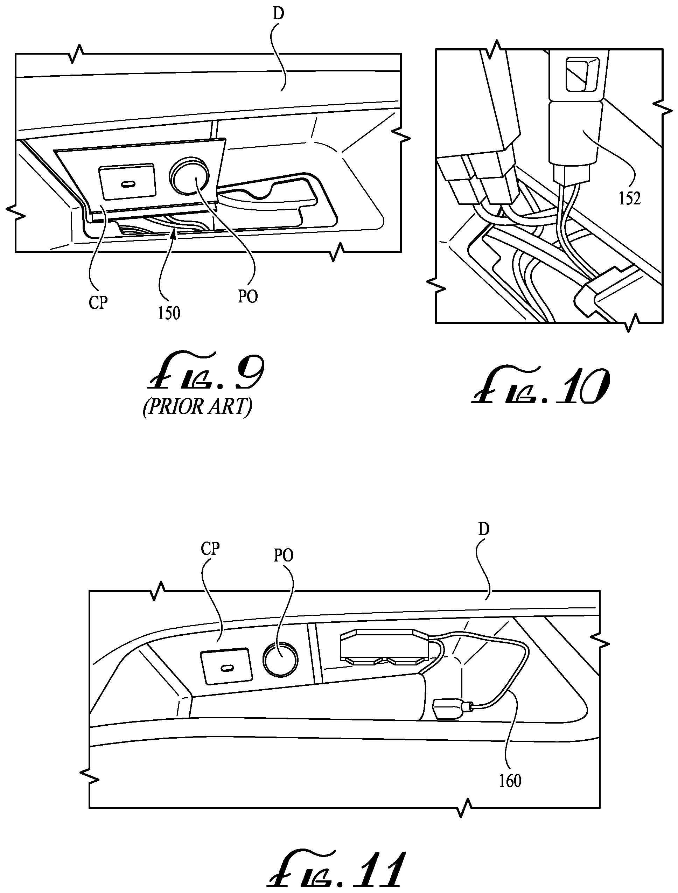

FIG. 9 shows a prior art environment wherein the power outlet PO and cover plate CP of a vehicle's dash D is shown being removed to expose wiring 150.

FIG. 10 shows a power supply 152 of the vehicle's dash D being accessed for electrical supply to the accessory electronic devices to be mounted to the accessory electronic device caddy.

FIG. 11 shows a power cord 160 for the accessory electronic device caddy after its installation is completed.

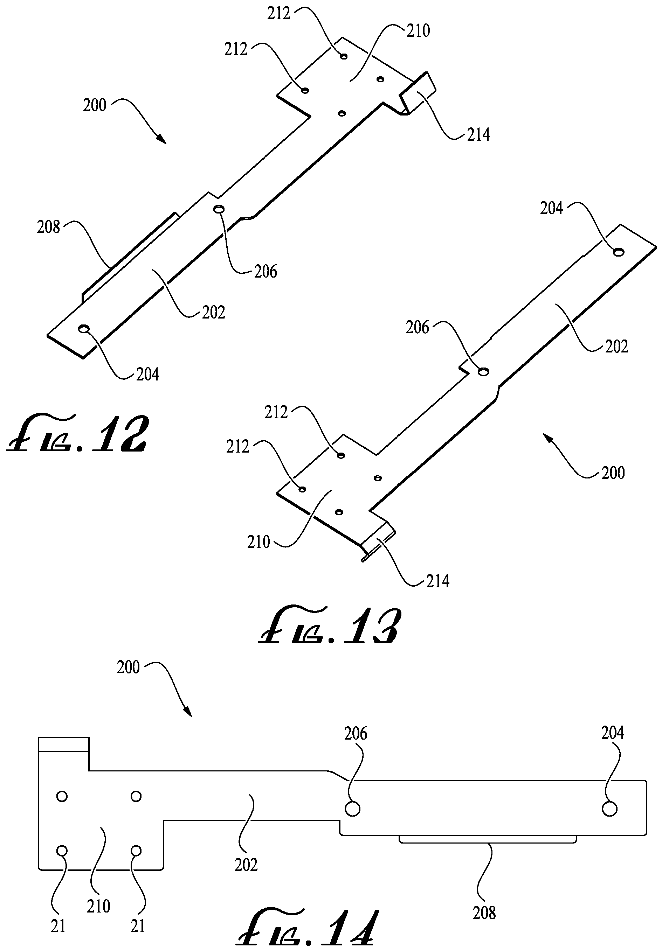

Referring now to FIGS. 12-14, there are shown various views of a second embodiment of the accessory electronic device holding bracket for a vehicle 200 of the invention. It comprises an elongated extension portion 202 with two spaced apart mounting holes 204 and 206 at one end of the elongated extension portion 202. At an opposite end of elongated extension portion 202 is a mounting plate portion 210 with a plurality of mounting holes 212. A grasping handle 214 can extend from the mounting plate portion 210.

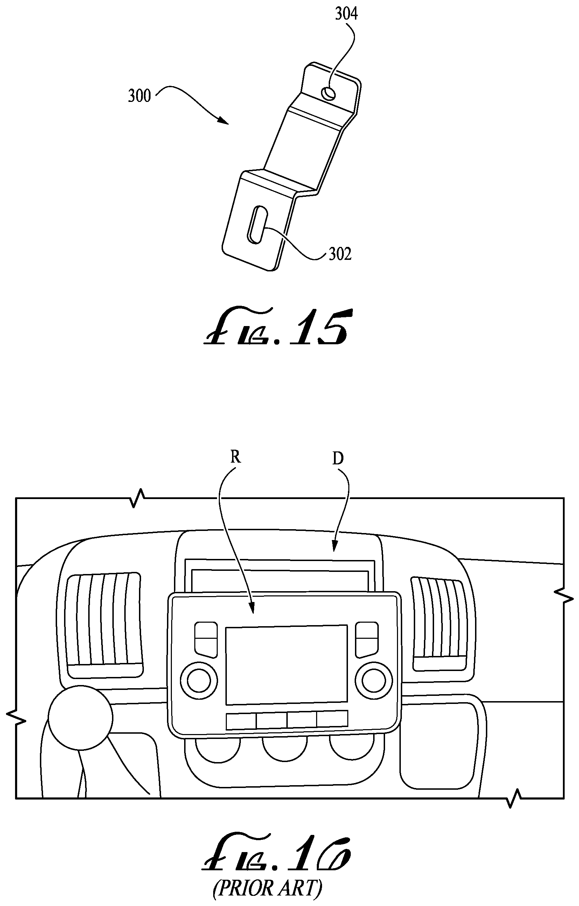

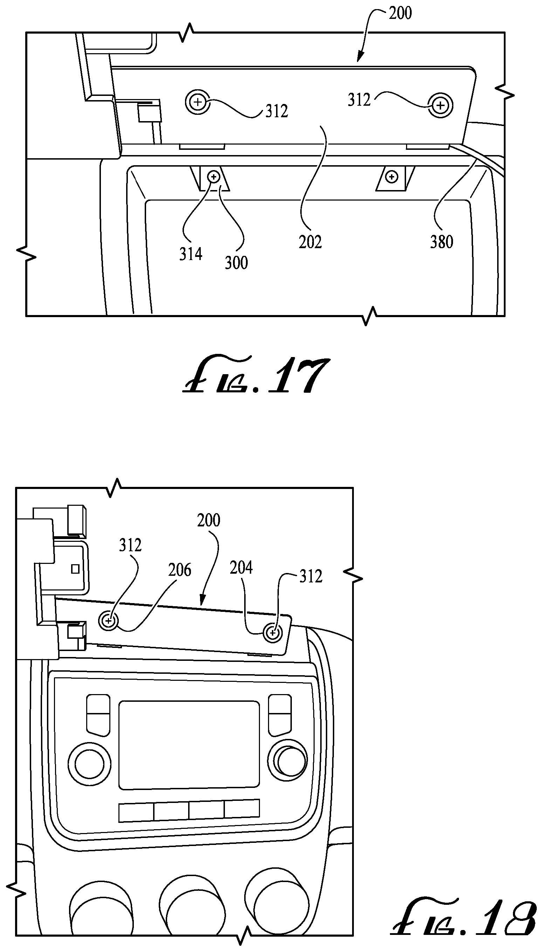

FIG. 15 is a perspective view of an exemplary embodiment of the device holding clips 300 used in conjunction with the accessory electronic device holding bracket 200 of FIG. 12. The device holding clips 300 are bent to conform to fit within a dashboard location of the vehicle as will be described further below and include a slotted aperture 302 for use in attaching to and permit some adjustment of the horizontal positioning of the accessory electronic device holding bracket 200 when installed. At an opposite end of the bracket 300 is a hole 304 for attachment with a screw or other fastener to the holes 204 and 206 to screw mounting locations 310 in the dashboard (See. FIG. 17).

FIG. 16 shows the environment (prior art) into which the accessory electronic device holder bracket 200 and device holding clips 300 will be installed and shows a radio R being removed from a dashboard D to access threaded mounting locations in the dashboard behind the radio.

FIG. 17 shows the radio R completely removed and the device holding clips 300 attached with screws 314 to the threaded mounting locations 310 in the dashboard behind the radio, and the accessory electronic device holding bracket 200 affixed with screws 312 through the holes 204 and 206 of the accessory electronic device holder bracket 200.

FIG. 18 shows the radio R and other parts of the dashboard D reinstalled, and an accessory electronic device caddy C attached to the accessory electronic device holding bracket 200, which accessory electronic device caddy receives and holds the electronic device.

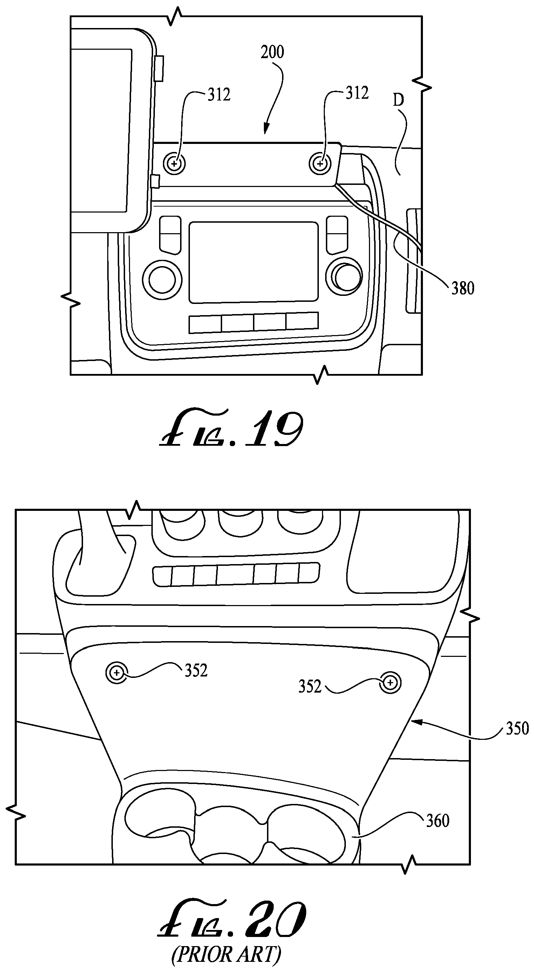

FIG. 19 shows horizontal adjustability of the accessory electronic device holding bracket 200 relative to the device holding clips (not shown). The screws 312 pass through the holes 204 and 206 of the accessory electronic device holder bracket 200 and engage with the elongate slots 302 of the device holding clips 300 attached to the dashboard, and thus there is allowed some up and down and horizontal adjustability of accessory electronic device holder bracket 200. Once the ideal position is achieved, the screws 312 can be tightened to lock in the desired position. The power cord 380 is also shown.

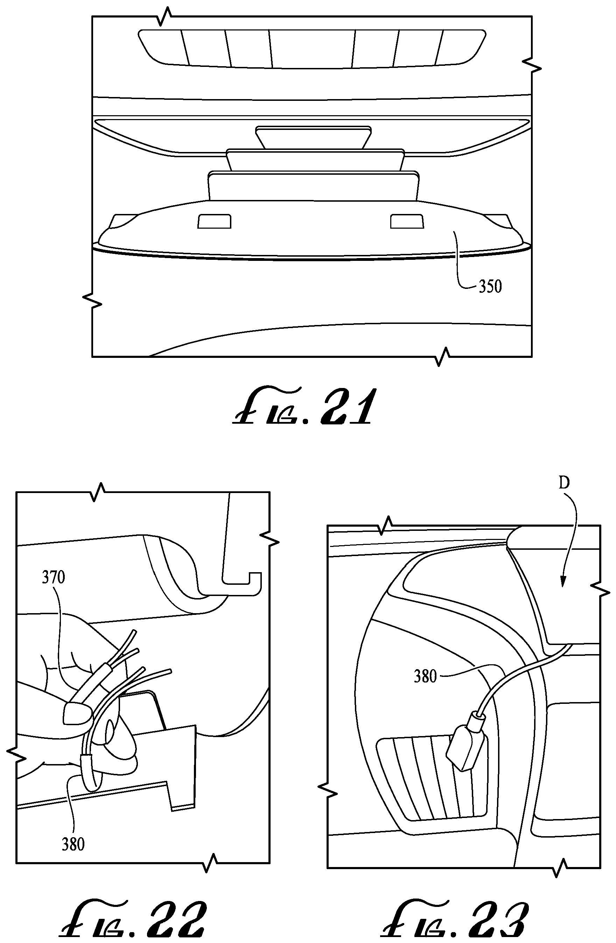

FIG. 20 shows portions of the dash area, including an under-radio cover panel 350 affixed with screws 352, and cup holder 360 that are to be removed to access an electrical supply wiring 370 in the dash area, as shown in FIG. 22.

FIG. 21 shows portions of the dash after the radio cover panel 350 affixed pulled back and cup holder 360 removed. FIG. 22 shows a power cord 380 being spliced into the electrical supply 370 in the dash area, and lastly, FIG. 23 shows a power cord for the accessory electronic device caddy after its installation is completed.

In both embodiments of the accessory electronic device holding bracket 100/200, power cords 160/380 can be included for electrical connection with electrical power lines in the dash area of the vehicle, with the power cords 160/380 being connected to the either the accessory electronic device caddy C which in turn holds and powers an accessory electronic device, or directly to the accessory electronic device E.

Thus the invention provides an accessory electronic device holding bracket 100/200 for attachment to a vehicle for detachably attaching and securely holding an accessory electronic device E, the accessory electronic device holding bracket 100/200 comprising an elongated extension portion 102/202 with two spaced apart attachment positions 104, 106/204, 206 adapted to rigidly engage with portions of a vehicle's dashboard D, and an accessory electronic device holder mounting portion 110/210 spaced away from the two spaced apart attachment positions 104, 106/204, 206, which device holder mounting portion 110/210 is adapted to engage with an accessory electronic device caddy C that physically retains an accessory electronic device E.

The accessory electronic device holding bracket (100/200) further has the two spaced apart attachment positions 104, 106/204, 206 that extend from the elongated extension portion 102/202 and has mounting holes 112, 114/204, 206 through which mounting holes 112, 114/204, 206 screws are used to attach the accessory electronic device holding bracket 100/200 to preexisting screw mounting holes in the vehicle. This provides easy and secure attachment of the electronic device holding bracket 100/200 to the vehicle's dash area

In an embodiment of the invention, the accessory electronic device holding bracket 200 further comprising clips 300 that mount to preexisting screw mounting position in a vehicle's dashboard, which clips 300 have slotted mounting apertures 302 at first ends for screw attachment to the vehicle and screw holes 304 at second ends for screw attachment to the two spaced apart attachment positions 204, 206 of the elongated extension portion 202 of the accessory electronic device holding bracket 200, wherein the slotted mounting apertures 302 allow for adjustment of the horizontal position of the accessory electronic device holding bracket 200 and the electronic devices E is designed to sturdily hold.

The accessory electronic device holding bracket 100/200 may further include a grasping handle 124, 224 that extends from the device holder mounting portion 110, 210.

The accessory electronic device holding bracket 100/200 further includes a power cord 160/380 adapted to electrically connect with electrical power lines or cables in the dash area D of the vehicle and thereby provides power to either the accessory electronic device caddy C which holds an accessory electronic device or directly to an accessory electronic device E.

In addition to the accessory electronic device holding bracket 100 and 200 described hereinabove, the invention provides a method to equip a vehicles with an accessory electronic device holding bracket and power supply method, that comprises the steps of (1) providing an accessory electronic device holding bracket having attachments for affixation to a dashboard area of a vehicle, (2) attaching the accessory electronic device holding bracket to the vehicle's dashboard such that the accessory electronic device holding bracket extends away from the dashboard bracket but remains securely mounted to the vehicle's dashboard, (3) providing for an electrical connection via a power cord to a power supply in a vehicle, such as by accessing existing power supplies in the cab of the vehicle and connecting or splicing in a power cord, and (4) detachably attaching an accessory electronic device to the accessory electronic device caddy C. In this method, the accessory electronic device holding bracket 100/200 as described above is used for detachably attaching and securely holding an accessory electronic device E. The method comprising affixing the accessory electronic device holding bracket 100/200 to the vehicle at the two spaced apart attachment positions 104, 106/204, 206 to a dash area of the vehicle, either with or without the clips 300, and electrically connecting the power cord 160/380 between the electrical power lines or cables in the dash area D of the vehicle and either to the accessory electronic device caddy C which holds an accessory electronic device E or directly to the accessory electronic device E. The accessory electronic device caddy C will be connected to the accessory electronic device holder mounting portion of the accessory electronic device holding bracket 100/200.

Heretofore, there was no such mounting bracket arrangement or method to secure an accessory electronic device securely to a vehicle's dashboard, yet which allows the accessory electronic device to be attached quickly and securely.

While this invention has been particularly shown and described with references to preferred embodiments thereof, it will be understood by those skilled in the art that various changes in form and details may be made therein without departing from the scope of the invention encompassed by the appended claims.

## Claims

1. An accessory electronic device holding bracket (100/200) for attachment to a vehicle for detachably attaching and securely holding an accessory electronic device (E), the accessory electronic device holding bracket (100/200) comprising:
an elongated extension portion (102/202) with two spaced apart attachment positions (104, 106/204, 206) adapted to rigidly engage with portions of a vehicle's dashboard (D); and
an accessory electronic device holder mounting portion (110/210) spaced away from the two spaced apart attachment positions (104, 106/204, 206), which device holder mounting portion (110/210) is adapted to engage with an accessory electronic device caddy (C) that physically retains an accessory electronic device (E).

2. The accessory electronic device holding bracket (100/200) of claim 1, wherein the two spaced apart attachment positions (104, 106/204, 206) extend from the elongated extension portion (102/202) and have mounting holes (112, 114/204, 206), through which mounting holes (112, 114/204, 206) screws (S) are used to attach the accessory electronic device holding bracket (100/200) to preexisting screw mounting holes in the vehicle.

3. The accessory electronic device holding bracket (100/200) of claim 1, further comprising clips (300) that mount to preexisting screw mounting position in a vehicle's dashboard, which clips (300) have slotted mounting apertures (302) at first ends for screw attachment to the vehicle and screw holes (304) at second ends for screw attachment to the two spaced apart attachment positions (204, 206) of the elongated extension portion (202) of the accessory electronic device holding bracket (200).

4. The accessory electronic device holding bracket (100/200) of claim 1-4, further comprising a grasping handle (124, 224) that extends from the device holder mounting portion (110, 210).

5. The accessory electronic device holding bracket (100/200) of claim 1-5, further comprising a power cord (160/380) adapted to electrically connect with electrical power lines or cables in the dash area (D) of the vehicle, which power cord (160/380) is connected to either the accessory electronic device caddy (C) which holds an accessory electronic device or directly to an accessory electronic device (E).

6. The accessory electronic device holding bracket (100/200) of claim 5 used in a method for detachably attaching and securely holding an accessory electronic device (E), the method comprising affixing the accessory electronic device holding bracket (100/200) to the vehicle at the two spaced apart attachment positions (104, 106/204, 206) to a dash area of the vehicle, either with or without the clips 300, electrically connecting the power cord (160/380) between the electrical power lines or cables in the dash area (D) of the vehicle and either to the accessory electronic device caddy (C) which holds an accessory electronic device (E), or directly to the accessory electronic device (E), and attaching the accessory electronic device caddy (C) to the accessory electronic device holder mounting portion (110/210) of the accessory electronic device holding bracket (100/200).
